(19) Europäisches Patentamt

European Patent Office

Office européen des brevets

(11) EP 1 624 279 A1

## (12) DEMANDE DE BREVET EUROPEEN

(43) Date de publication:
08.02.2006 Bulletin 2006/06

(51) Int Cl.:
*G01B 11/02* (2006.01)

(21) Numéro de dépôt: 04292014.0

(22) Date de dépôt: 06.08.2004

(84) Etats contractants désignés:
AT BE BG CH CY CZ DE DK EE ES FI FR GB GR HU IE IT LI LU MC NL PL PT RO SE SI SK TR
Etats d'extension désignés:
AL HR LT LV MK

(71) Demandeur: Axalto SA
92120 Montrouge (FR)

(72) Inventeurs:
• Ros, Frederic,
c/o Axalto SA
92120 Montrouge (FR)

• Chardon, Joseph,
c/o Axalto SA
92120 Montrouge (FR)
• De Brio Gonzalez, Maria,
c/o Axalto SA
92120 Montrouge (FR)
• Courtadeur, Laurent,
c/o Axalto SA
92120 Montrouge (FR)

(54) **Système et procédé de mesure sans contact de dimensions d'un corps d'objet opaque**

(57)    L'invention concerne un système ainsi qu'un procédé de mesure sans contact d'une dimension d'un corps d'objet opaque (12). L'invention se caractérise en ce que le système comporte un support d'objet (10), au moins deux capteurs (15a, 15b) photosensibles à transfert de charge, un premier capteur photosensible étant disposé de manière qu'il capte la lumière d'un premier bord de l'objet, un second capteur étant disposé de manière qu'il capte la lumière d'un second bord de l'objet, un convertisseur apte à convertir des courants électriques produits par lesdits capteurs en données numériques, et des moyens pour calculer, à partir desdites données numériques, la dimension du corps d'objet entre le dit premier bord et le dit second bord. L'invention s'applique en particulier à la mesure de dimensions des cartes à puce.

FIG. 1B

Printed by Jouve, 75001 PARIS (FR)

**Description**

L'invention concerne un système de mesure sans contact d'une dimension d'un corps d'objet opaque ainsi qu'un procédé correspondant. Elle concerne plus particulièrement un tel système et un tel procédé pour la mesure sans contact des dimensions d'un objet au format carte.

Les cartes et notamment les cartes à puce sont des objets normalisés dont les dimensions sont définies dans la norme ISO 7810. Ainsi que cela est défini dans cette norme, les dimensions des cartes sont les suivantes : 86 mm de longueur, 54 mm le largeur et 0,76 mm d'épaisseur.

Il est particulièrement difficile de fabriquer des cartes en série ayant exactement les dimensions requises par la norme ISO 7810. En pratique, les dimensions des cartes fabriquées varient, selon les séries, de quelques dizaines de microns. Ces variations doivent être mesurées.

Aujourd'hui les outils de mesure des dimensions des cartes sont de deux types : les outils de mesure avec contact et les outils de mesure sans contact.

Parmi les outils de mesure avec contact, on peut citer les jauges de mesure commercialisées par la société Mühlbauer (TM) et les pieds à coulisse.

Pour l'utilisation des jauges de mesure Mühlbauer, les cartes sont disposées verticales sur un support et un pied est positionné sur le bord supérieur de la carte. En fonction de la position de ce pied, on peut déduire une dimension de la carte, comprise entre celle du support et celle de l'extrémité du pied.

Les pieds à coulisse sont bien connus de l'art antérieur. L'objet à mesurer est placé entre une partie fixe de l'extrémité du pied et une partie coulissante. En fonction de la position de la partie coulissante lorsque celle-ci touche le rebord de la carte, on lit, sur les graduations du pied, la dimension de la carte.

La précision des mesures réalisées par les outils de mesure à contacts est faible, de l'ordre de quelques dizaines de microns. Elle dépend de la force appliquée par l'opérateur aux outils de mesure pour la mesure. En effet, cette force appliquée peut conduire à une légère flexion de la carte et par suite à des erreurs dans sa mesure.

Parmi les outils de mesure sans contact, on peut citer les projecteurs de profil. Ces projecteurs utilisent une caméra et projettent une image de la carte sur un écran. Un opérateur positionne alors les points entre lesquels une distance, correspondant à la dimension à mesurer, doit être mesurée et en déduit cette dimension. D'autres projecteurs plus perfectionnés basent essentiellement la précision de mesure sur le déplacement préprogrammé (X,Y) d'une caméra reliée à un logiciel de traitement. Outre le coût de tels projecteurs, ils s'apparentent plus à des systèmes à installer en laboratoire plutôt que dans des ateliers de production.

La précision obtenue dépend alors de l'opérateur qui positionne les points de mesure. En outre, de tels outils sont particulièrement coûteux et sont mal adaptés pour des mesures d'objets normalisés fabriqué en séries comme les cartes à puce.

Compte tenu de ce qui précède, un problème que se propose de résoudre l'invention et de réaliser un système de mesure sans contact d'un corps d'objet opaque tel qu'un objet normalisé au format carte, qui montre une grande précision par rapport aux systèmes de l'état de la technique, par exemple, de plus ou moins 5 $\mu$m, qui soit indépendant du facteur humain et qui montre une certaine compacité et ce, pour des coûts faibles.

La solution de l'invention à ce problème a pour premier objet un système de mesure sans contact d'une dimension d'un corps d'objet opaque tel qu'un objet normalisé au format carte, caractérisé en ce qu'il comporte : un support d'objet ; au moins deux capteurs photosensibles à transfert de charge, un premier capteur photosensible étant disposé de manière qu'il capte la lumière d'un premier bord de l'objet, un second capteur étant disposé de manière qu'il capte la lumière d'un second bord de l'objet ; un convertisseur apte à convertir des courants électriques produits par lesdits capteurs en données numériques ; et des moyens pour calculer, à partir desdites données numériques, la dimension du corps d'objet entre le dit premier bord et le dit second bord.

Elle a pour second objet un procédé de mesure sans contact d'une dimension d'un corps d'objet opaque tel qu'un objet normalisé au format carte, caractérisé en ce qu'il comporte les étapes suivantes selon lesquelles : on monte un système (20) comportant un support d'objet (10), au moins deux capteurs (15a, 15b) photosensibles à transfert de charge, un premier capteur (15a) photosensible étant disposé de manière qu'il capte la lumière d'un premier bord de l'objet, un second capteur (15b) étant disposé de manière qu'il capte la lumière d'un second bord de l'objet, un convertisseur apte à convertir des courants électriques produits par lesdits capteurs en données numériques, et des moyens pour calculer, à partir desdites données numériques, la dimension du corps d'objet entre le dit premier bord et le dit second bord ; on effectue un calibrage (21) dudit système au moyen d'un ou plusieurs objets étalons ; on valide le calibrage (25) ; et on mesure une dimension de du corps d'objet.

L'opérateur intervient uniquement pour positionner la carte sur son support. Quelle que soit la position de la carte, tant que les capteurs photosensibles à transfert de charge sont disposés de manière à percevoir la lumière des bords de la cartes, une mesure précise peut être effectuée. Par suite, 1e facteur humain est supprimé dans la mesure et la précision atteinte est de l'ordre de plus ou moins 5 $\mu$m sous l'hypothèse que ces bords de cartes soient suffisamment propres localement (hypothèse vérifiée avec des cartes calibres).

L'invention sera mieux comprise à la lecture de la description suivante de modes de réalisation illustratifs du système et de mise en oeuvre du procédé, cette description n'étant pas limitative, et rédigée au regard des dessins, dans lesquels :

- les figures 1A et 1B montrent, de manière schématique et, respectivement, de dessus et de côté, un système selon l'invention ;
- la figure 2 illustre les étapes de calibrage sur système selon l'invention ;
- les figures 3A et 3B montrent des photos prises par les deux caméras munies d'un capteur CCD d'un système selon l'invention ;
- la figure 4 est une représentation résumant les photos des figures 3A et 3B ; et
- la figure 5 montre l'angle $\Delta_\theta$ entre les repères visuels des caméras.

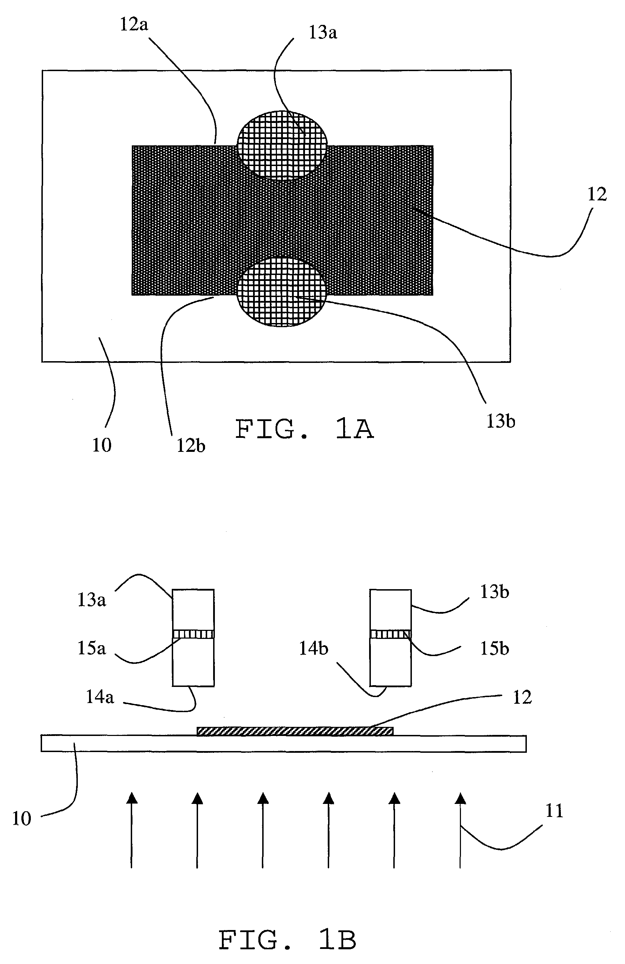

Ainsi que cela est montré aux figures 1A et 1B, le système selon l'invention comporte un support d'objet 10 transparent, par exemple une plaque de plexiglas. Ce support d'objet 10 est rétro-éclairé 11 par des moyens de rétro-éclairage non représentés sur les figures, par exemple, une simple lampe néon. L'objet opaque à mesurer, ici la carte 12, est placé sur le support d'objet 10. Deux caméras 13a et 13a, chacune munie d'un objectif 14a ou 14b, distantes d'environ 50 mm l'une de l'autre, sont positionnées à la verticale de la carte 12. Chaque caméra comporte un capteur photosensible à transfert de charge ou capteur CCD 15a ou 15b. Ces capteurs ne sont pas des capteurs de type tout ou rien mais des capteurs qui délivrent un signal matriciel de capture permettant un réel travail de mesure subséquent. En outre, ces capteurs sont de basse résolution en comparaison notamment des capteurs commercialisés avec des appareils photos numériques de dernière génération. Ils ne visualisent qu'une zone limitée de la carte, à la frontière de ses bords 12a, 12b. A résolution équivalente, la visualisation de toute la carte nécessiterait un capteur linéaire ou matriciel de seulement 9000 pixels. De tels capteurs linéaires existent sur le marché mais à des coûts relativement élevés. Selon l'invention, les objectifs 14a, 14b des caméras sont orientés de manière que le capteur 15a de la caméra 13a capte la lumière reçue du premier bord 12a de la carte 12 tandis que le capteur 15b de la caméra 13b capte la lumière reçue du second bord 12b de cette carte 12.

Les capteurs CCD 15a, 15b génèrent des courants électriques en fonction de la lumière reçue. Ces courants électriques sont convertis en données numériques par un convertisseur non représenté sur les figures.

En outre, le système selon l'invention comporte des moyens pour calculer, à partir des données numériques générées par le convertisseur, une dimension du corps de carte. Ces moyens de calculs sont par exemple formé par un ordinateur connecté aux caméras. Cet ordinateur implémente avantageusement un algorithme de détection de frontière qui permet d'obtenir, sans aucune intervention de l'utilisateur, et pour chacun des deux capteurs CCD, la représentation exacte de la frontière séparant l'objet de l'espace environnant et ce, dans le repère du capteur correspondant.

Préalablement à la mesure des dimensions des cartes, le système selon l'invention doit être monté et calibré. Le calibrage permet de déterminer les paramètres physiques du système, en particulier la relation entre les deux repères des capteurs. C'est cette modélisation physique qui permet à l'aide d'algorithmes dédiés de réaliser des mesures sur une base différentielle et donc d'obtenir un système bas coût, performant et compact.

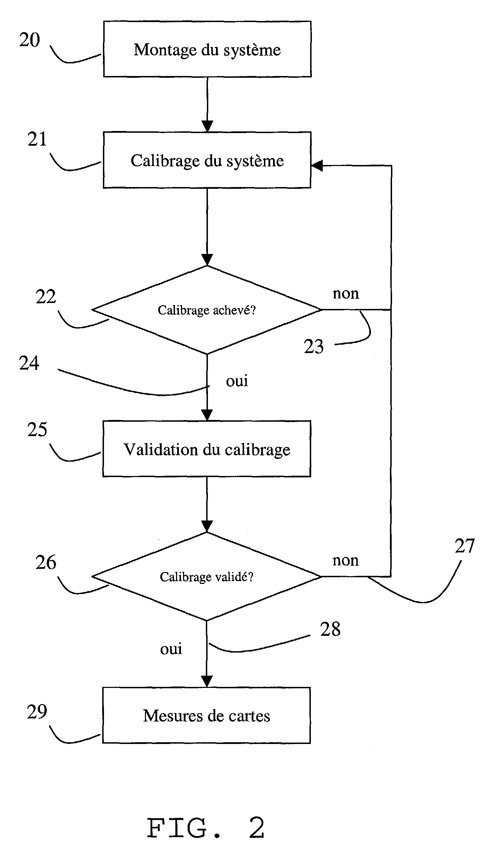

Les étapes de montage et de calibrage sont illustrées schématiquement à la figure 2. Ainsi que cela est montré dans cette figure, le système est tout d'abord monté 20 ou installé dans une unité de production de cartes. Une fois le montage effectué, il est calibré en 21 en utilisant des cartes étalons dont la mesure est connue avec une précision de plus ou moins 2 $\mu$m. Un test 22 sur le point de savoir si le calibrage est achevé ou non est effectué. Si le calibrage n'est pas achevé 23, alors les étapes de calibrage sont recommencées. Si le calibrage est achevé 24, alors on procède à la validation de ce calibrage 25. A l'issue de cette validation, un nouveau test est effectué 26. Si le calibrage n'est pas validé 27, alors on procède de nouveau au calibrage du système 21. Si le calibrage est effectivement validé 28, alors la mesure des dimensions des cartes 29 peut commencer. Le calibrage est considéré comme achevé lorsque le système est capable de mesurer des cartes étalons avec une précision de plus ou moins 5 $\mu$m.

La méthode de calibrage dépend directement de l'équation de mesure du corps de carte. Cette équation de mesure est démontrée dans la suite de la présente description. La méthode de calibrage est abordée à la suite de cette démonstration.

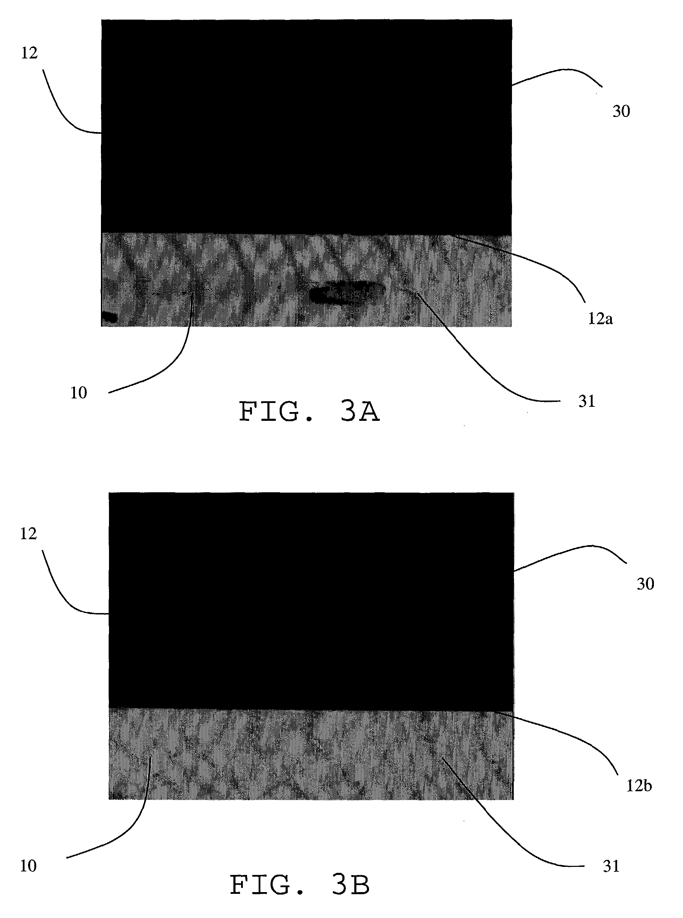

Un exemple d'images obtenues par le système selon l'invention est montré aux figures 3A et 3B. L'image de la figure 3A est obtenue par la caméra 13a et l'image de la figure 3B est obtenue par la caméra 13b. Ces images présentent chacune une partie noire ou sombre 30 et une partie blanche ou claire 31. La partie noire ou sombre 30 correspond au corps de carte 12 et la partie blanche ou claire 31 correspond à l'extérieur de la carte (le support plexiglas rétro-éclairé 10). La limite entre les parties noires ou sombres et les parties blanches ou claires définit les bords 12a, 12b de la carte 12.

Dans les deux images, la partie noire ou sombre 30 est située en partie haute. Cela est du au fait que les caméras 13a, 13b sont placées en sens inverse l'une de l'autre, la carte 12 étant positionnée entre ces caméras.

Pour la mesure, plusieurs paramètres sont pris en compte. Tout d'abord, les caméras sont considérées comme des repères M1, M2 indépendants, l'un des repères étant choisi comme repère visuel. La mesure dépend alors des constantes suivantes :

- G1, le grossissement de la première caméra 13a ;
- G2, le grossissement de la seconde caméra 13b ;
- d1, l'écart suivant l'axe vertical y entre les origines des deux repères ;
- d2, l'écart suivant l'axe horizontal x entre les origines des deux repères ;
- l'angle relatif entre les repères.

Ces constantes sont considérées comme connues, puisqu'elles sont fournies par le calibrage. En outre, l'écart suivant l'axe z est négligé dans la mesure où des objectifs 14a, 14b identiques sont utilisés pour les caméras.

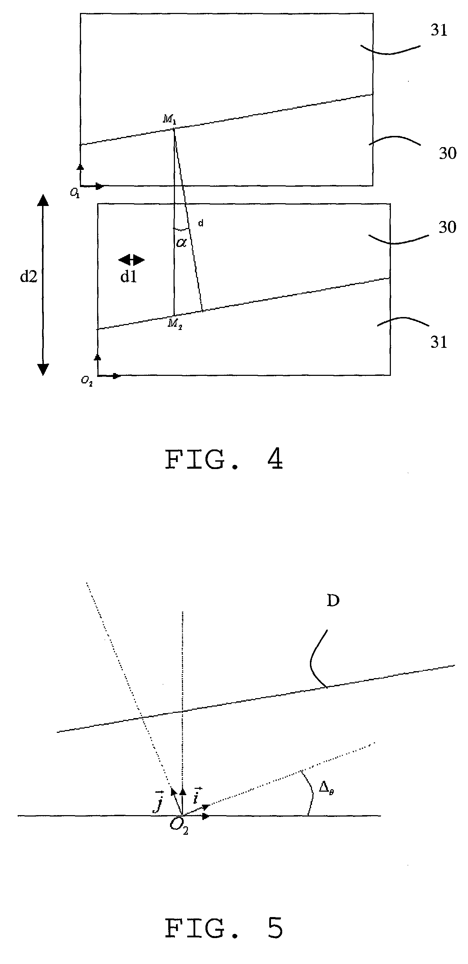

Aussi, les deux images se résument selon le schéma de la figure 4.

Dans le cas le plus simple, les deux caméras n'ont aucun angle relatif mais ont leur repère respectifs décalé suivant les axes x et y comme illustré sur la figure 4. L'algorithme de détection de bords utilisé donne les équations des droites correspondants aux frontières et, par suite, aux bords 12a, 12b de la carte 12. Ces équations sont du type :

$$y = a_1 x + b_1$$

et

$$y = a_2 x + b_2$$

Pour effectuer la mesure, l'image issue de la première caméra 13a, qui présente une partie noire 30 dans sa partie supérieure, est retournée. Ce retournement n'a pas de conséquence importante dans les calculs. La pente de 1a droite reste la même. Toutefois, l'ordonnée à l'origine change. Il est donc nécessaire de considérer la nouvelle valeur d'ordonnée suivante à l'origine :

$$b_1 = IMG\_CCD\_HEIGHT - b_1 - a_1 * IMG\_CCD\_WIDTH$$

Si l'on considère la pente moyenne :

$$a = \frac{a_1 + a_2}{2}$$

entre ces deux droites pour mesurer la carte, l'angle formé par les deux droites est :

$$\alpha = \arctan(a)$$
.

La relation vectorielle existant est alors la suivante :

$$\overrightarrow{M_1 M_2} = \overrightarrow{M_1 O_1} + \overrightarrow{O_1 O_2} + \overrightarrow{O_2 M_2}$$

La distance d recherchée entre les deux droites, qui correspond à la taille connue de la carte, est finalement donnée par la relation suivante :

$$d = \left\|\overrightarrow{M_1M_2}\right\| \cos(\alpha)$$

Le repère virtuel choisi est celui de la première camera, et par suite, celui de l'image du haut (Figure 3A). Les vecteurs ont chacun les coordonnées suivantes dans ce repère :

$$\overrightarrow{M_1M_2} = \left(0, -\left\|\overrightarrow{M_1M_2}\right\|\right)$$

$$\overrightarrow{O_1M_1} = \left(x_1, a_1x_1 + G_1b_1\right)$$

$$\overrightarrow{O_1O_2} = \left(d_1, -d_2\right)$$

$$\overrightarrow{O_2M_2} = \left(x_2, a_2x_2 + G_2b_2\right)$$

Dans ces équations, les constantes $G_1$ et $G_2$ traduisent la taille d'un pixel en $\mu$m, ce que nous appelons le grossissement, et les distances $d_1$ et $d_2$ traduisent le décalage des deux repères dans le plan.

D'après l'équation de Chasles, nous obtenons donc les équations suivantes :

$$x_1 = x_2 + d_1$$

soit

$$d_1 = x_1 - x_2$$

et

$$\left\|\overrightarrow{M_1M_2}\right\| = a_1d_1 + G_1b_1 - G_2b_2 + d_2$$

La mesure d'une carte étalon nous donne donc la relation suivante :

$$d = (a_1d_1 + G_1b_1 - G_2b_2 + d_2)\cos(\alpha)$$

Il est possible de tenir compte de l'angle relatif existant entre les deux repères. Le repère virtuel choisi étant celui de la première camera, cet angle est $\Delta_\theta$. Il est représenté à la figure 5.

L'équation de la droite D dans le repère initial de la seconde caméra $(O_2, \vec{i}, \vec{j})$ est du type :

$$y = a_2x + b_2.$$

Cette équation fournit l'algorithme de détection de frontière.

Si l'on recherche maintenant l'équation de cette droite dans le repère correspondant à la seconde caméra et qui n'a aucun angle relatif par rapport au repère de la première camera, il suffit ensuite d'appliquer les calculs avec cette nouvelle équation de droite :

$$y' = a'_2 x' + b'_2$$

Pour obtenir cette équation, il suffit de se placer dans les deux cas suivants: Pour $x=0$ dans le repère initial, $y = b_2$ et, dans le nouveau repère, l'équivalent des coordonnées est $x' = -b_2 \sin(\Delta_\theta)$ et $y' = b_2\cos(\Delta_\theta)$. Pour $y = 0$ dans le repère initial

$$x = -\frac{b_2}{a_2}$$

et, dans le nouveau repère, l'équivalent est des coordonnées est le suivant:

$$x' = -\frac{b_2}{a_2}\cos(\Delta_\theta)$$

et

$$y' = -\frac{b_2}{a_2}\sin(\Delta_\theta)$$

On obtient finalement le système d'équations suivant:

$$\begin{cases} -\dfrac{b_2}{a_2}\sin(\Delta_\theta) = -\dfrac{a'_2 b_2}{a_2}\cos(\Delta_\theta) + b'_2 \\ b_2\cos(\Delta_\theta) = -a'_2 b_2\sin(\Delta_\theta) + b'_2 \end{cases}$$

De ce système d'équation, on peut déduire les coefficients caractéristiques de l'équation de la droite dans un repère qui n'a pas d'angle relatif avec le repère de la première camera :

$$a'_2 = \frac{a_2\cos(\Delta_\theta) + \sin(\Delta_\theta)}{\cos(\Delta_\theta) - a_2\sin(\Delta_\theta)}$$

et

$$b'_2 = \frac{b_2}{\cos(\Delta_\theta) - a_2\sin(\Delta_\theta)}$$

Connaissant l'équation de la droite dans le repère initial, il est possible d'appliquer ces formules pour obtenir l'équation de la droite dans un repère en vue d'effectuer les calculs donnés précédemment.

La mesure de la carte est donc donnée par l'équation suivante qui dépend de plusieurs des constantes précitées est ainsi :

$$d = (ad_1 + G_1 b_1 - G_2 b'_2 + d_2) \cos(\arctan(a))$$

dans laquelle

$$a = \frac{a'_2 + a_1}{2}$$

est la pente moyenne entre les deux droites obtenues.

La phase de calibrage permet d'évaluer les constantes utilisées dans les calculs précédents. Elle s'effectue avec des cartes étalons dont les dimensions sont parfaitement connues et présentant des bords parallèles. La connaissance de l'angle $\Delta_\theta$ est donnée par le fait que, pour ce type de cartes, les deux droites observées sur les images sont parallèles. Connaissant toutes les équations des droites, l'équation suivante doit être vérifiée :

$$a_1 = a'_2 = \frac{a_2 \cos(\Delta_\theta) + \sin(\Delta_\theta)}{\cos(\Delta_\theta) - a_2 \sin(\Delta_\theta)}$$

où $\alpha_1$ et $\alpha_2$ sont obtenus par l'algorithme précédent.

On obtient alors l'équation suivante :

$$\tan(\Delta_\theta) = \frac{a_1 - a_2}{1 + a_1 a_2}$$

Etant donné que plusieurs mesures sont effectuées, la constante est estimée par la méthode des moindres carrés en minimisant l'erreur suivante :

$$\varepsilon^2 = \sum_i ((1 + a_{1_i} a_{2_i}) \tan(\Delta_\theta) + a_{2_i} - a_{1_i})^2$$

La dérivée de cette expression par rapport à l'angle $\Delta_\theta$ est la suivante:

$$\frac{\partial \varepsilon^2}{\partial \Delta_\theta} = 2 \sum_i ((1 + a_{1_i} a_{2_i}) \tan(\Delta_\theta) + a_{2_i} - a_{1_i})(1 + a_{1_i} a_{2_i}) \frac{1}{\cos^2(\Delta_\theta)}$$

Elle s'annule dans le cas suivant:

$$\tan(\Delta_\theta) = \frac{\sum_i (1 + a_{1_i} a_{2_i})(a_{1_i} - a_{2_i})}{\sum_i (1 + a_{1_i} a_{2_i})^2}$$

Cela donne l'angle réel entre les deux repères de camera d'après les équations des droites obtenues lors du calibrage.

Nous rappelons l'équation de la mesure :

$$d = (ad_1 + G_1 b_1 - G_2 b_2' + d_2)\cos(\arctan(a))$$

Lors de la i$^{ème}$ mesure de la carte étalon de dimension connue $d_i$, il est possible de quantifier l'erreur de mesure. Sur toutes les mesures effectuées pour le calibrage, l'erreur globale obtenue est la suivante :

$$\varepsilon^2 = \sum_i (d_i - a_i(a_{1_i} d_1 + G_1 b_{1_i} - G_2 b_{2_i}' + d_2))^2$$

où $a_i = \cos(\arctan(a_{1_i}))$.

Les droites étant parallèles,

$$a_{1_i} = a_{2_i}' = \frac{a_{1_i} + a_{2_i}'}{2}$$

pour tout i. Néanmoins, pour plus de sécurité la moyenne de ces valeurs est prise en compte.

Les dérivées partielles de cette expression par rapport aux quatre constantes à déterminer sont ensuite annulées. Cela permet de déterminer les données optimales du système par une simple session de calibrage.

On obtient donc un système de quatre équations à quatre inconnues. Ces équations sont les suivantes :

$$\begin{cases} \dfrac{\partial \varepsilon^2}{\partial d_1} = 0 \\[2mm] \dfrac{\partial \varepsilon^2}{\partial d_2} = 0 \\[2mm] \dfrac{\partial \varepsilon^2}{\partial G_1} = 0 \\[2mm] \dfrac{\partial \varepsilon^2}{\partial G_2} = 0 \end{cases}$$

soit

$$\begin{cases} \sum_i a_i a_{1_i} (d_i - a_i(a_{1_i} d_1 + G_1 b_{1_i} - G_2 b_{2_i}' + d_2)) = 0 \\[2mm] \sum_i a_i (d_i - a_i(a_{1_i} d_1 + G_1 b_{1_i} - G_2 b_{2_i}' + d_2)) = 0 \\[2mm] \sum_i a_i b_{1_i} (d_i - a_i(a_{1_i} d_1 + G_1 b_{1_i} - G_2 b_{2_i}' + d_2)) = 0 \\[2mm] \sum_i a_i b_{2_i}' (d_i - a_i(a_{1_i} d_1 + G_1 b_{1_i} - G_2 b_{2_i}' + d_2)) = 0 \end{cases}$$

c'est-à-dire :

$$\begin{cases} \sum_i d_i a_i a_{1_i} = \sum_i a_i^2 a_{1_i} (a_{1_i} d_1 + G_1 b_{1_i} - G_2 b'_{2_i} + d_2) \\ \sum_i d_i a_i = \sum_i a_i^2 (a_{1_i} d_1 + G_1 b_{1_i} - G_2 b'_{2_i} + d_2) \\ \sum_i d_i a_i b_{1_i} = \sum_i a_i^2 b_{1_i} (a_{1_i} d_1 + G_1 b_{1_i} - G_2 b'_{2_i} + d_2) \\ \sum_i d_i a_i b'_{2_i} = \sum_i a_i^2 b'_{2_i} (a_{1_i} d_1 + G_1 b_{1_i} - G_2 b'_{2_i} + d_2) \end{cases}$$

puis

$$\begin{cases} \sum_i d_i a_i a_{1_i} = \sum_i a_i^2 a_{1_i}^2 d_1 + \sum_i a_i^2 a_{1_i} b_{1_i} G_1 - \sum_i a_i^2 a_{1_i} b'_{2_i} G_2 + \sum_i a_i^2 a_{1_i} d_2 \\ \sum_i d_i a_i = \sum_i a_i^2 a_{1_i} d_1 + \sum_i a_i^2 b_{1_i} G_1 - \sum_i a_i^2 b'_{2_i} G_2 + \sum_i a_i^2 d_2 \\ \sum_i d_i a_i b_{1_i} = \sum_i a_i^2 a_{1_i} b_{1_i} d_1 + \sum_i a_i^2 b_{1_i}^2 G_1 - \sum_i a_i^2 b_{1_i} b'_{2_i} G_2 + \sum_i a_i^2 b_{1_i} d_2 \\ \sum_i d_i a_i b'_{2_i} = \sum_i a_i^2 a_{1_i} b'_{2_i} d_1 + \sum_i a_i^2 b'_{2_i} b_{1_i} G_1 - \sum_i a_i^2 b'^2_{2_i} G_2 + \sum_i a_i^2 b'_{2_i} d_2 \end{cases}$$

En version matricielle, on a donc l'équation suivante :

$$AX = B$$

avec

$$A = \begin{bmatrix} A_1 & A_2 & A_3 & A_4 \\ A_5 & A_6 & A_7 & A_8 \\ A_9 & A_{10} & A_{11} & A_{12} \\ A_{13} & A_{14} & A_{15} & A_{16} \end{bmatrix} \quad X = \begin{bmatrix} d_1 \\ G_1 \\ G_2 \\ d_2 \end{bmatrix} \quad B = \begin{bmatrix} B_1 \\ B_2 \\ B_3 \\ B_4 \end{bmatrix}$$

$$A_1 = \sum_i a_i^2 a_{1_i}^2 \qquad A_2 = \sum_i a_i^2 a_{1_i} b_{1_i} \qquad A_3 = -\sum_i a_i^2 a_{1_i} b'_{2_i} \qquad A_4 = \sum_i a_i^2 a_{1_i}$$

$$A_5 = A_4 \qquad A_6 = \sum_i a_i^2 b_{1_i} \qquad A_7 = -\sum_i a_i^2 b'_{2_i} \qquad A_8 = \sum_i a_i^2$$

$$A_9 = A_2 \qquad A_{10} = \sum_i a_i^2 b_{1_i}^2 \qquad A_{11} = -\sum_i a_i^2 b_{1_i} b'_{2_i} \qquad A_{12} = A_6$$

$$A_{13} = -A_3 \qquad A_{14} = -A_{11} \qquad A_{15} = -\sum_i a_i^2 b'^2_{2_i} \qquad A_{16} = -A_7$$

$$B_1 = \sum_i d_i a_i a_{1_i} \qquad B_2 = \sum_i d_i a_i \qquad B_3 = \sum_i d_i a_i b_{1_i} \qquad B_4 = \sum_i d_i a_i b'_{2_i}$$

d'où :

$$A = \begin{bmatrix} A_1 & A_2 & A_3 & A_4 \\ A_4 & A_6 & A_7 & A_8 \\ A_2 & A_{10} & A_{11} & A_6 \\ -A_3 & -A_{11} & A_{15} & -A_7 \end{bmatrix}$$

La première étape du pivot de Gauss nous donne la matrice suivante :

$$A' = \begin{bmatrix} A_1 & A_2 & A_3 & A_4 \\ 0 & A'_1 & A'_2 & A'_3 \\ 0 & A'_4 & A'_5 & A'_6 \\ 0 & A'_7 & A'_8 & A'_9 \end{bmatrix}$$

avec :

$$A'_1 = A_2 - \frac{A_1 A_6}{A_4} \qquad A'_2 = A_3 - \frac{A_1 A_7}{A_4} \qquad A'_3 = A_4 - \frac{A_1 A_8}{A_4}$$

$$A'_4 = A_2 - \frac{A_1 A_{10}}{A_2} \qquad A'_5 = A_3 - \frac{A_1 A_{11}}{A_2} \qquad A'_6 = A_4 - \frac{A_1 A_6}{A_2}$$

$$A'_7 = A_2 - \frac{A_1 A_{11}}{A_3} \qquad A'_8 = A_3 + \frac{A_1 A_{15}}{A_3} \qquad A'_9 = A_4 - \frac{A_1 A_7}{A_3}$$

et

$$B' = \begin{bmatrix} B_1 \\ B'_1 \\ B'_2 \\ B'_3 \end{bmatrix}$$

avec :

$$B'_1 = B_1 - \frac{A_1 B_2}{A_4} \qquad B'_2 = B_1 - \frac{A_1 B_3}{A_2} \qquad B'_3 = B_1 + \frac{A_1 B_4}{A_3}$$

Après la deuxième étape du pivot de Gauss, on obtient les matrices suivantes :

$$A'' = \begin{bmatrix} A_1 & A_2 & A_3 & A_4 \\ 0 & A'_1 & A'_2 & A'_3 \\ 0 & 0 & A''_1 & A''_2 \\ 0 & 0 & A''_3 & A''_4 \end{bmatrix}$$

avec :

$$A''_1 = A'_2 - \frac{A'_1 A'_5}{A'_4} \qquad A''_2 = A'_3 - \frac{A'_1 A'_6}{A'_4} \qquad A''_3 = A'_2 - \frac{A'_1 A'_8}{A'_7} \qquad A''_4 = A'_3 - \frac{A'_1 A'_9}{A'_7}$$

et

$$B'' = \begin{bmatrix} B_1 \\ B'_1 \\ B''_1 \\ B''_2 \end{bmatrix}$$

avec :

$$B''_1 = B'_1 - \frac{A'_1 B'_2}{A'_4} \qquad B''_2 = B'_1 - \frac{A'_1 B'_3}{A'_7}$$

Enfin, après la troisième étape, on obtient :

$$A''' = \begin{bmatrix} A_1 & A_2 & A_3 & A_4 \\ 0 & A'_1 & A'_2 & A'_3 \\ 0 & 0 & A''_1 & A''_2 \\ 0 & 0 & 0 & A'''_1 \end{bmatrix}$$

avec

$$A'''_1 = A''_2 - \frac{A''_1 A''_4}{A''_3}$$

et

$$B''' = \begin{bmatrix} B_1 \\ B'_1 \\ B''_1 \\ B'''_1 \end{bmatrix}$$

avec

$$B_1''' = B_1'' - \frac{A_1'' B_2''}{A_3''}$$

Soit l'équation matricielle suivante :

$$A''' X = B'''$$

On obtient les valeurs suivantes:

$$d_2 = \frac{B_1'''}{A_1'''}$$

et

$$G_2 = \frac{B_1'' - A_2'' d_2}{A_1''}$$

puis

$$G_1 = \frac{(B_1' - d_2 A_3' - A_2' G_2)}{A_1'}$$

et, finalement :

$$d_1 = \frac{(B_1 - d_2 A_4 - A_3 G_2 - A_2 G_1)}{A_1} .$$

Une fois ces informations obtenues, le système est parfaitement connu. La position et l'angle relatif des deux repères ainsi que le grossissement précis de chacune des caméras sont connus. Le calibrage est ainsi achevé.

Lorsque le calibrage est correctement achevé, les mesures effectuées avec le système selon l'invention sont, pour une carte, justes à plus ou moins 5 $\mu$m. Cette précision dépend essentiellement de la résolution des capteurs et de l'algorithme utilisé pour la reconnaissance des frontières.

Les mesures sont effectuées de manière automatique si l'on considère comme automatique, un processus tel, qu'après calibrage su système, un seul ordre de mesure via, par exemple, un click de souris, permet d'extraire les mesures de manière objective et répétitives. Aucune action humaine n'est nécessaire si ce n'est placer l'objet à mesurer sous les caméras : la mesure ne dépend donc d'aucun facteur humain.

Le fait d'utiliser des capteurs CCD permet d'obtenir un système complet de mesure à un rapport qualité/prix très attractif par rapport aux systèmes existants.

Il est bien entendu que non seulement la largeur mais aussi la longueur des cartes peut être mesurée au moyen d'un système selon l'invention. Dans le cas d'une mesure de la longueur, les caméras seront distantes d'environ 80 mm. En outre, d'autre objets opaques sont susceptibles d'être mesurés grâce au système selon l'invention, l'écartement des caméras étant fonction des dimensions à mesurer de ces objets.

Des systèmes plus complexes, comprenant plus de deux caméras, ou alors des systèmes dont les capteurs CCD de grandes surfaces peuvent être utilisés selon l'invention. En particulier, le système de l'invention peut comporter N capteurs, N étant un entier naturel. La limite de N est la limite d'insertion physique des capteurs pour la mesure de l'objet. Dans le cas d'une carte, il est possible de positionner 3 capteurs à la verticale de chaque bord de la largeur de la carte et 9 capteurs en tout. En outre, il est possible d'imaginer un système dans lequel l'objet à mesurer se déplace de manière continue au-dessous des capteurs. Un tel système est formé par exemple, d'un moyen de convoyage réduit. Les mesures sont alors effectuées en différentes positions de la carte qui défile sous les capteurs.

Plus généralement, de multiples variations des modes de réalisation décrits ci-dessus peuvent être envisagées tout en restant dans le cadre large de l'invention.

## Revendications

1. Système de mesure sans contact d'une dimension d'un corps d'objet opaque (12) tel qu'un objet normalisé au format carte, **caractérisé en ce qu'**il comporte :

   un support d'objet (10) ;
   au moins deux capteurs (15a, 15b) photosensibles à transfert de charge, un premier capteur (15a) photosensible étant disposé de manière qu'il capte la lumière d'un premier bord (12a) de l'objet, un second capteur étant disposé de manière qu'il capte la lumière d'un second bord (12b) de l'objet ;
   un convertisseur apte à convertir des courants électriques produits par lesdits capteurs en données numériques ; et
   des moyens pour calculer, à partir desdites données numériques, la dimension du corps d'objet entre le dit premier bord et le dit second bord.

2. Système selon la revendication 1, **caractérisé en ce qu'**il comporte des moyens de rétro-éclairage (11) de l'objet.

3. Système selon l'une des revendications 1 ou 2, **caractérisé en ce que** chaque capteur est monté dans une caméra (13a, 13b) positionnée à la verticale de l'objet à mesurer posé sur sont support.

4. Système selon la revendication 3, **caractérisé en ce que** chaque caméra comporte un objectif.

5. Système selon l'une des revendications précédentes, **caractérisé en ce qu'**il comporte des moyens pour détecter la frontière du corps d'objet avec le support.

6. Système selon l'une des revendications précédentes, **caractérisé en ce que** l'objet est une carte.

7. Procédé de mesure sans contact d'une dimension d'un corps d'objet opaque tel qu'un objet normalisé au format carte, **caractérisé en ce qu'**il comporte les étapes suivantes selon lesquelles :

   on monte un système (20) comportant un support d'objet (10), au moins deux capteurs (15a, 15b) photosensibles à transfert de charge, un premier capteur (15a) photosensible étant disposé de manière qu'il capte la lumière d'un premier bord de l'objet, un second capteur (15b) étant disposé de manière qu'il capte la lumière d'un second bord de l'objet, un convertisseur apte à convertir des courants électriques produits par lesdits capteurs en données numériques, et des moyens pour calculer, à partir desdites données numériques, la dimension du corps d'objet entre le dit premier bord et le dit second bord ;
   on effectue un calibrage (21) dudit système au moyen d'un ou plusieurs objets étalons ;
   on valide le calibrage (25) ; et
   on mesure une dimension de du corps d'objet.

FIG. 1A

FIG. 1B

20 — Montage du système

21 — Calibrage du système

22 — Calibrage achevé? → non — 23

24 — oui

25 — Validation du calibrage

26 — Calibrage validé? → non — 27

28 — oui

29 — Mesures de cartes

FIG. 2

FIG. 3A

FIG. 3B

FIG. 4

FIG. 5

**Office européen**

**des brevets**

**RAPPORT DE RECHERCHE EUROPEENNE**

Numéro de la demande

EP 04 29 2014

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 260 780 A (STAUDT III JOHN J) 9 novembre 1993 (1993-11-09) * colonne 1, ligne 19 - ligne 35 * * colonne 3, ligne 44 - ligne 56 * * colonne 4, ligne 24 - ligne 55 * * figure 1 * | 1-4 | G01B11/02 |
| Y | | 7 | |
| A | | 5,6 | |
| | ----- | | |
| Y | PATENT ABSTRACTS OF JAPAN vol. 0120, no. 95 (P-681), 29 mars 1988 (1988-03-29) -& JP 62 229012 A (AGENCY OF IND SCIENCE & TECHNOL; others: 01), 7 octobre 1987 (1987-10-07) * le document en entier * | 1-4 | |
| A | | 5-7 | |
| | ----- | | |
| Y | EP 0 500 400 A (MITSUI SHIPBUILDING ENG ; TOYAMA LIGHT METAL IND (JP)) 26 août 1992 (1992-08-26) * colonne 2, ligne 57 - colonne 5, ligne 6 * * figures 1,2 * | 1-4 | DOMAINES TECHNIQUES RECHERCHES (Int.Cl.7) G01B |
| A | | 5-7 | |
| | ----- | | |
| Y | US 3 650 397 A (BORNEMEIER DWIGHT D) 21 mars 1972 (1972-03-21) * le document en entier * | 7 | |
| A | | 1-6 | |
| | ----- | | |

Le présent rapport a été établi pour toutes les revendications

| Lieu de la recherche | Date d'achèvement de la recherche | Examinateur |
|---|---|---|
| Munich | 10 janvier 2005 | Grand, J-Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 2014

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-01-2005

| Document brevet cité au rapport de recherche | | Date de publication | Membre(s) de la famille de brevet(s) | | Date de publication |
|---|---|---|---|---|---|
| US 5260780 | A | 09-11-1993 | AUCUN | | |
| JP 62229012 | A | 07-10-1987 | JP<br>JP | 1730141 C<br>4010002 B | 29-01-1993<br>24-02-1992 |
| EP 0500400 | A | 26-08-1992 | JP<br>EP<br>NO<br>US | 4269607 A<br>0500400 A2<br>920725 A<br>5481298 A | 25-09-1992<br>26-08-1992<br>26-08-1992<br>02-01-1996 |
| US 3650397 | A | 21-03-1972 | AUCUN | | |

EPO FORM P0460

Pour tout renseignement concernant cette annexe : voir Journal Officiel de l'Office européen des brevets, No.12/82